# EUROPÄISCHE PATENTSCHRIFT

(11) **EP 3 762 545 B1**
(45) Veröffentlichungstag und Bekanntmachung des Hinweises auf die Patenterteilung: **09.08.2023**
(21) Anmeldenummer: 19709913.8
(22) Anmeldetag: 07.03.2019
(51) Int. Cl.: E01D 15/24, E02B 17/00

(54) **OFFSHORE-PLATTFORM MIT EINER PLATTFORM UND EINER ANLADEVORRICHTUNG SOWIE VERFAHREN ZUM PERSONALTRANSFER**
OFFSHORE PLATFORM COMPRISING A DECK AND A DOCKING DEVICE, AND METHOD FOR TRANSFERRING PERSONNEL
PLATE-FORME EN MER COMPORTANT UNE PLATE-FORME ET UN DISPOSITIF DE DÉBARQUEMENT ET PROCÉDÉ DE TRANSFERT DE PERSONNEL

(30) Priorität: 08.03.2018 DE 102018105328
(43) Veröffentlichungstag der Anmeldung: 13.01.2021
(73) Patentinhaber: Tractebel Overdick GmbH, 20457 Hamburg (DE)
(72) Erfinder: OLTMANN, Klaas, 21217 Seevetal (DE)
(74) Vertreter: Groth, Wieland
(86) Internationale Anmeldenummer: PCT/EP2019/055776
(87) Internationale Veröffentlichungsnummer: WO 2019/170833

(56) Entgegenhaltungen:
- WO-A1-2011/019289
- WO-A2-2010/034429
- WO-A2-2010/034429
- DE-U1- 20 211 145
- ES-A1- 2 380 034
- ES-A1- 2 380 034
- GB-A- 2 483 630
- US-A- 3 373 713
- US-A- 3 373 713
- US-A- 4 817 552

## Beschreibung

Die Erfindung betrifft eine Offshore-Plattform mit einer Plattform und einer Anlandevorrichtung. Die Erfindung betrifft auch ein Verfahren zum Personentransfer auf eine und von einer Offshore-Plattform.

Offshore-Plattformen sind im Stand der Technik natürlich hinlänglich bekannt.

Offshore-Plattformen weisen eine Plattform mit einer Oberseite, auch Deck genannt, auf. Bei sogenannten "Hubinseln" ist die Plattform selbst schwimmfähig, und Stützbeine werden durch die Plattform hindurchgeführt.

In dem angehobenen Zustand wird die Hubinsel auf dem Meer auf Lokation verbracht, und dort werden die Stützbeine abgesenkt. Nachdem die Stützbeine Kontakt mit dem Boden haben und dort fest aufstehen, wird mittels eines Jacking-Systems o. Ä. die Plattform aus dem Meer herausgehoben und auf einer Betriebshöhe an den Stützbeinen fixiert. Der Spalt zwischen Meeresspiegel und Unterseite der Plattform kann beträchtlich sein. Er wird vorzugsweise so gewählt, dass der Wellenschlag unter der Plattform hindurchläuft, sodass möglichst wenig Last gegen die Offshore-Plattform wirkt.

Problematisch ist der Transfer von Personen mittels sog. "Crew Transfer Vessels", also Versorgungsbooten, zur Plattform hin und von der Plattform weg. Dazu sind entlang der Stützbeine möglicherweise Leitern vorgesehen. Die Personen können auch mittels eines geeigneten krankbasierten Transfersystems mit Mannkorb, eines sogenannten "Frogs" oder "Billy Pughs", von der und zur Plattform verbracht werden. Diese Vorrichtungen sind relativ unbequem für die Personen und setzen darüber hinaus auch einen weiteren Kranführer voraus. Das ist natürlich teuer und zeitaufwändig.

In der ES 2 380 034 A1 ist eine Anlandevorrichtung für eine Windkraftanlage beschrieben, dort wird eine Treppe entlang eines Schienensystems hoch und runter verfahren, wobei am unteren Ende der Treppe drei Anlegestellen vorgesehen ist.

In der WO 2010/034429 A2 ist eine Anlandevorrichtung offenbart, die direkt am Turmfuß einer Windkraftanlage angeordnet ist, wobei ein Personentransferelement vertikal gegenüber einem Schiff und der Windkraftanlage beweglich ist und den Übergang vom Schiff auf eine Leiter der Windkraftanlage ermöglicht.

In der US 3,373,713 ist eine Anlandevorrichtung für eine Ölplattform beschrieben, wobei ein Übergangselement entlang von Tragseilen die von einem Träger lotrecht abgehen neben einem Stützbein hin und her verfahrbar ist.

Es ist erste Aufgabe der Erfindung, eine Offshore-Plattform zur Verfügung zu stellen, die die genannten Nachteile vermeidet, zumindest verringert.

Es ist zweite Aufgabe der Erfindung, ein Verfahren zum Transfer von Personen zur Verfügung zu stellen, das die genannten Nachteile verringert.

Im ersten Aspekt wird die Aufgabe durch eine eingangs genannte Offshore-Plattform-Vorrichtung mit den Merkmalen des Anspruchs 1 gelöst.

Die erfindungsgemäße Offshore-Plattform weist eine Plattform auf, die vorzugsweise das Deck und Aufbauten auf dem Deck umfasst, sowie eine Anlandevorrichtung, die länglich ausgebildet ist und eine Längsachse aufweist, die lotrecht ausgerichtet ist. Die Anlandevorrichtung ist entlang ihrer Längsachse relativ zur Plattform hin und her verfahrbar, sie ist insbesondere in eine Transportposition anhebbar und in zumindest eine Betriebsposition absenkbar. Am unteren, d. h. dem Meeresboden zugewandten Ende weist die Anlandevorrichtung wenigstens eine Anlandestelle auf. Die wenigstens eine Anlandestelle ist zum Anlegen eines Bootes, insbesondere eines Crew Transfer Vessels (CTV) vorgesehen. Die Anlandevorrichtung ist omnidirektional ausgebildet.

Die Anlandevorrichtung selbst kann entlang ihres Außenumfanges rohrförmig ausgebildet sein; sie kann im Querschnitt jedoch auch quadratisch, rechteckig sein oder andere Formen aufweisen. Sie ist im Inneren hohl und durch Personen begehbar.

Vorzugsweise weist die Anlandevorrichtung einen Innenraum auf, der begehbar ist und der eine begehbare Verbindung zwischen der wenigstens einen Anlandestelle und einem Ausgang herstellt. Die Anlandevorrichtung hat die Funktion eines Treppenhauses oder Fahrstuhlschachtes und ist vorzugsweise vergleichbar dimensioniert.

Vorzugsweise ist sie jedoch rohrförmig ausgebildet, d. h. sie hat eine im Querschnitt im Wesentlichen kreisrunde Außenform entlang ihrer vorzugsweise gesamten Längsachse, die eine Drehbewegung der Anlandevorrichtung relativ zur Plattform erleichtert.

Vorzugsweise ist die wenigstens eine Anlandestelle um die Längsachse drehbar ausgebildet. Die vorzugsweise genau eine drehbare Anlandestelle ist vorzugsweise am unteren Ende einer um die Längsachse drehbaren Anlandevorrichtung vorgesehen. Dabei kann die Anlandevorrichtung selbst bspw. als Doppelrohr ausgebildet sein, wobei das innere Rohr drehbar in dem äußeren Rohr angeordnet ist und das äußere Rohr in Richtung der Längsachse hin und her verfahrbar gegenüber der Plattform an der Plattform angeordnet ist. Dadurch kann die Anlandung des Bootes jeweils immer genau gegen den vorherrschenden Seegang erfolgen, um übermäßige Rollbewegungen des Bootes zu verhindern und den Transfer sicherer zu machen.

Die Anlandevorrichtung kann insbesondere an ihrer Außenwandung Zahnstangen aufweisen, die im Querschnitt vorzugsweise T-förmig ausgebildet sind und mit jeweils zwei nebeneinander angeordneten Zahnrädern, die drehbar an einer Innenseite einer Öffnung der Plattform vorgesehen sind, zusammenwirken. Die Anlandevorrichtung ist vorzugsweise durch ein günstigerweise zylindrisches Rohr, das durch die Plattform, insbesondere durch einen Durchgang hindurchgeführt ist. Sie ist in dieser Öffnung hin und her verfahrbar, d. h. nach oben anhebbar, nach unten absenkbar.

Am unteren Ende der Anlandevorrichtung sind günstigerweise die Längsachse umlaufend mehrere Anlandestellen angeordnet. Bei dieser Ausführungsform braucht die Anlandevorrichtung selbst nicht um die Längsachse drehbar ausgebildet zu sein; es ist hinreichend, wenn sie entlang der Längsachse verfahrbar ist. Jede der Anlandestellen ist zum Anlanden eines CTV bestimmt und ausgelegt. Jede der Anlandestellen umfasst eine Leiter. Beidseitig und radial außen ist neben der Leiter jeweils ein Anfahrschutz angeordnet ist. Der Anfahrschutz kann als Stahlrohr ausgebildet sein, das vorzugsweise meeresbodenseitig nach radial innen abgewinkelt ist. Die Vorrichtung wird dabei jeweils so weit abgesenkt, dass ein Unterfahren mit dem Boot im Wellental verhindert wird.

Die Anlandevorrichtung umfasst einen Innenraum, durch den die Leitern der Anlandestellen von der jeweiligen Anlandestelle zu dem am oberen Ende angeordneten Ausgang geführt sind. Es können vorzugsweise mehrere übereinander angeordnete Ausgänge am oberen Abschnitt bis hinein in den mittleren Abschnitt der Anlandevorrichtung vorgesehen sein. Die Anlandevorrichtung ist in verschiedenen Betriebspositionen an der Plattform fixierbar. Die Betriebspositionen richten sich nach der Höhe des Meeresspiegels und der Meerestiefe. Je nach Betriebsposition steht ein unterschiedlich langer Abschnitt der Anlandevorrichtung unterhalb der Plattform ab, der jeweils so lang gewählt ist, dass ein unteres Ende der Anlandevorrichtung die Meeresoberfläche berührt oder ein bestimmtes Stück weit in das Meer eintaucht.

Im zweiten Aspekt wird die Aufgabe durch ein Verfahren mit den Merkmalen des Anspruchs 10 gelöst.

Das Verfahren zeichnet sich erfindungsgemäß dadurch aus, dass eine Anlandevorrichtung entlang einer Längsachse, die lotrecht ausgerichtet ist, relativ zu einer Plattform abgesenkt wird, bis ein unteres Ende der Anlandevorrichtung, die wenigstens eine Anlandestelle aufweist, von einem Boot aus erreichbar ist, vorzugsweise das Meer berührt.

Verfahrensgemäß kann die Offshore-Plattform-Vorrichtung zunächst mit eingezogenen Stützbeinen und auch angehobener Anlandevorrichtung auf Lokation verbracht werden. Die Anlandevorrichtung ist soweit angehoben, dass auch ihr unteres Ende einen Tiefgang der Offshore-Plattformvorrichtung nicht erhöht. Vorzugsweise steht ein unteres Ende der Anlandevorrichtung nicht über eine Unterwasserfläche der Plattform hinaus ab.

Auf Lokation werden dann zunächst die Stützbeine abgesenkt, bis sie fest auf dem Meeresgrund aufstehen. Die Plattform wird mittels eines Jacking-Systems o. Ä, aus dem Meer herausgehoben, bis sie eine Betriebsposition erreicht hat. In der Betriebsposition der Plattform wird die Transportposition der Anlandevorrichtung verlassen, und auch die Anlandevorrichtung wird in ihre Betriebsposition überführt. Die Betriebsposition der Anlandevorrichtung zeichnet sich dadurch aus, dass eine Anlandestelle am unteren Ende der Anlandevorrichtung von einem Boot aus begehbar ist, vorzugsweise in das Meer eintaucht, oder kurz über dem Meeresspiegel angeordnet ist, so dass an der Anlandevorrichtung angeordnete Leitern von dem Boot aus bequem bestiegen werden können.

Eine Eindringtiefe der Anlandevorrichtung in das Wasser kann einem gezeitenveränderlichen Wasserstand nachgeführt werden. Die Anlandevorrichtung weist also verschiedene Betriebspositionen auf, die sich nach der Spaltbreite zwischen Meeresoberfläche und Unterseite der Plattform richten. Die Spaltbreite hängt von den Gezeiten ab, aber auch von der Lokation der Plattform. Die Anlandevorrichtung kann in den verschiedenen Betriebspositionen an der Plattform fixiert werden. Die Betriebspositionen unterscheiden sich durch die Länge eines unterhalb der Plattform abstehenden Abschnitts der Anlandevorrichtung.

Die Erfindung wird anhand eines Ausführungsbeispiels in sechs Figuren beschrieben. Dabei zeigen:
- Fig. 1: eine seitliche Ansicht einer auf Stützbeine abgestützten Offshore-Plattformvorrichtung mit abgesenkter Anlandevorrichtung und Boot,
- Fig. 2: eine schwimmende Offshore-Plattformvorrichtung mit angehobener Anlandevorrichtung und angehobenen Stützbeinen,
- Fig. 3: seitliche Ansicht eines Teils der Offshore-Plattformvorrichtung mit aufgesetztem Stützbein und abgesenkter Anlandevorrichtung und an der Anlandevorrichtung angelegtem Boot,
- Fig. 4a: seitliche Ansicht der Anlandevorrichtung mit einer Mehrzahl an Ausgängen,
- Fig. 4b: isometrische Ansicht der Anlandevorrichtung in Fig. 4a,
- Fig. 4c: Querschnittsansicht entlang der Linie IVc - IVc in Fig. 4a.

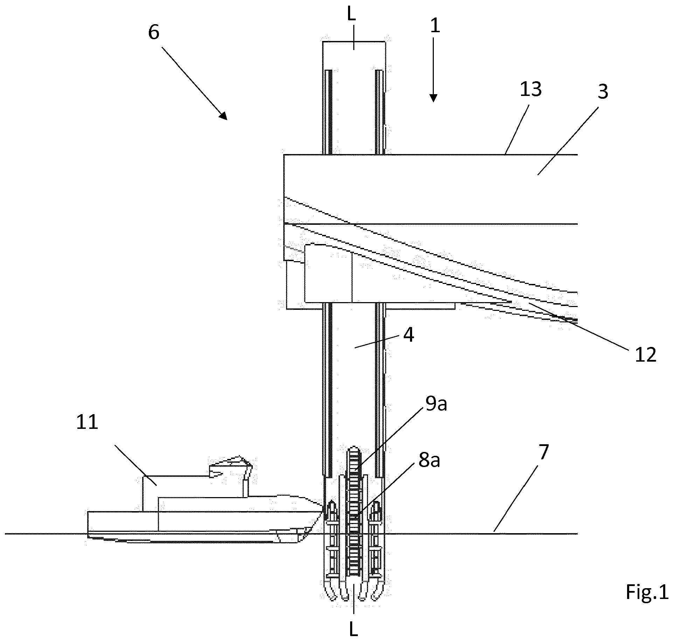

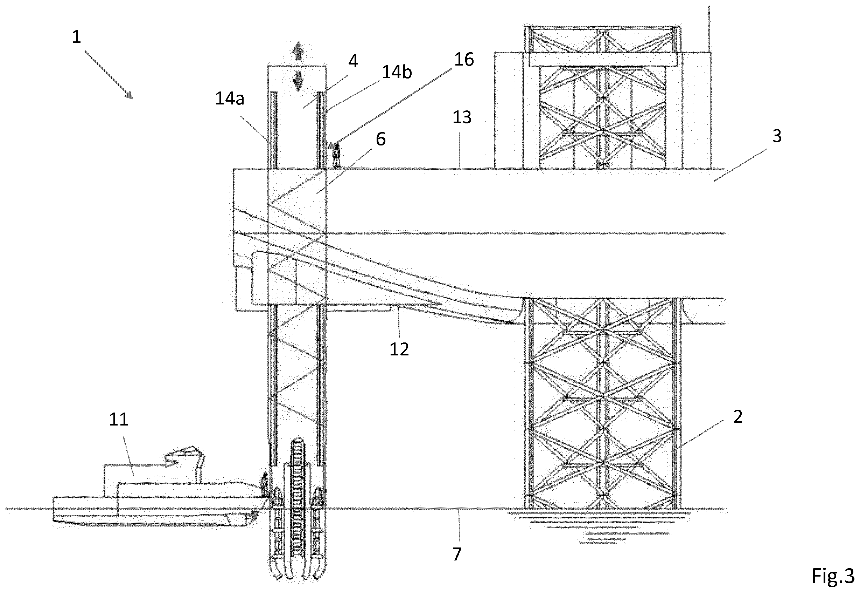

Fig. 1 zeigt einen Teil einer Offshore-Plattformvorrichtung 1, die eine Mehrzahl, vorzugsweise drei, vier oder eine höhere Anzahl, an Stützbeinen 2 aufweist, die auf einem Meeresboden abgesenkt sind und die Offshore-Plattformvorrichtung 1 dort abstützen. Die Stützbeine 2 sind in der Fig. 3 gezeigt. Eine Plattform 3 wird mittels beispielsweise eines Jacking-Systems aus dem Meer herausgehoben und in eine Betriebsposition angehoben. In der Betriebsposition der Plattform 3 wird eine erfindungsgemäße Anlandevorrichtung 4 in Funktion genommen. Die Anlandevorrichtung 4 ist durch einen Durchgang 6 in der Plattform 3 vollständig hindurchgeführt. Die Anlandevorrichtung 4 ist ein rohrförmiges Gebilde mit einer vollständig geraden Längsachse L, die lotrecht ausgerichtet ist. Die Anlandevorrichtung 4 kann entlang ihrer Längsachse L, also senkrecht zu einer Meeresoberfläche 7, angehoben und abgesenkt werden. Wenn die Plattform 3 in Betriebsposition gemäß Fig. 1 oder Fig. 3 ist, wird die Anlandevorrichtung 4 soweit abgesenkt, bis ein unteres dem Meeresboden zugewandtes Ende der Anlandevorrichtung 4 die Meeresoberfläche 7 berührt und vorzugsweise ein Stück weit in das Wasser eingetaucht ist. Dann wird die Anlandevorrichtung 4 an der Plattform 3 fixiert, bspw. durch Querbolzen o. Ä., und in ihrer Betriebsposition relativ zur Plattform 3 zunächst dauerhaft gehalten. Bei sich verändernder Wasserhöhe durch die Gezeiten kann die Position der Anlandevorrichtung 4 relativ zur Plattform 3 in der Weise nachgestellt werden, dass die Anlandevorrichtung 4 bei sich hebendem Wasserspiegel angehoben und bei sich senkendem Wasserspiegel abgesenkt wird und ein in etwa gleichbleibender unterer Abschnitt der Anlandevorrichtung 4 im Wasser eingetaucht bleibt.

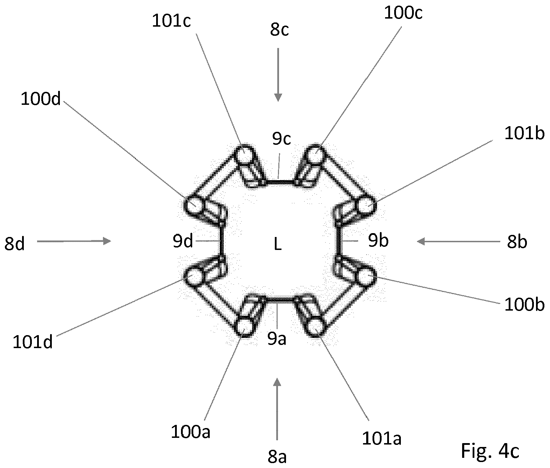

Am unteren Ende der Anlandevorrichtung 4 sind in Fig. 1 vier Anlandestellen 8a, 8b, 8c, 8d angeordnet. Zu sehen ist nur die vorderste Anlandestelle 8a. Fig. 4c zeigt die gleichmäßige Verteilung der Anlandestellen 8a, 8b, 8c, 8d rund um die Anlandevorrichtung 4 herum Jede der Anlandestellen 8a, 8b, 8c, 8d weist eine mittig angeordnete Leiter 9a, 9b, 9c, 9d auf, auf die das Personal von einem Boot 11 direkt übersteigen kann, bzw. von der Leiter 9a, 9b, 9c, 9d kann das Personal direkt auf den Bug des Bootes 11 übersteigen. An beiden Seiten jeder Leiter 9a, 9b, 9c, 9d ist in Richtung der Längsachse L jeweils ein Anfahrschutz 100a, 101a, 100b, 101b, 100c, 101c, 100d, 101d vorgesehen. Dabei handelt es sich um entlang der Längsachse L ausgerichtete Stahlrohre, die derart beabstandet sind, dass die verwendeten Boote 11, insbesondere Crew Transfer Vessels (CTVs), mit ihrem Bug zwischen zwei benachbarte Anfahrschutzstäbe fahren und dabei beide die Anfahrschutzstäbe berühren und eine Bugspitze dennoch ein Stück weit beabstandet von der Leiter 9a, 9b, 9c, 9d positioniert bleibt. Günstigerweise weist der Bug des CTV Fender oder eine Gummibeschichtung auf. Bei eingeschaltetem Vortrieb des CTV entsteht durch den Druck des Bugs gegen den Anfahrschutz 100a, 101a, 100b, 101b, 100c, 101c, 100d, 101d eine reibschlüssige Verbindung zwischen dem Bug des CTV und dem Anfahrschutz 100a, 101a, 100b, 101b, 100c, 101c, 100d, 101d, so dass der Bug seine Position relativ zur Leiter 9a, 9b, 9c, 9d trotz Wellengangs beibehält und ein sicherer Übergang des Personals von einem Deck 13 des Bootes 11 auf die Leiter 9a, 9b, 9c, 9d oder umgekehrt ermöglicht wird.

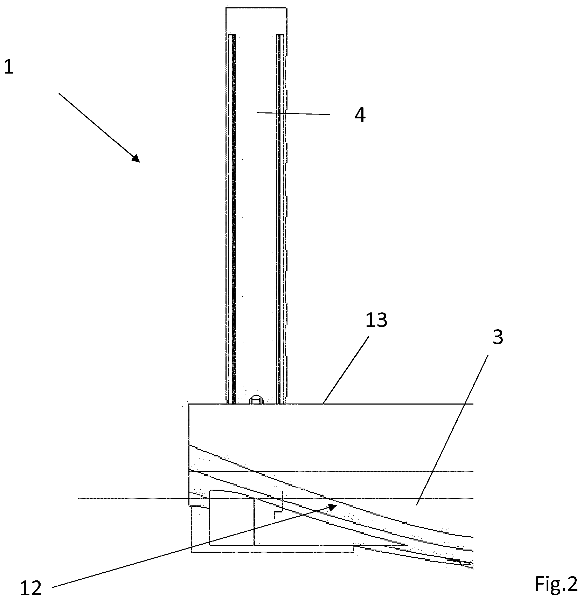

Fig. 2 zeigt die Offshore- Plattformvorrichtung 1 der Fig. 1 in einer Transportposition. Die nicht dargestellten Stützbeine 2 sind eingezogen, und die Plattform 3 schwimmt im Meer. In der Transportposition ist die Anlandevorrichtung 4 vollständig angehoben und befindet sich selbst in einer Transportposition. In der Transportposition ragt das untere Ende der Anlandevorrichtung 4 nicht über eine Unterwasserfläche 12 der Plattform 3 in Richtung des Meeresbodens heraus.

Fig. 3 zeigt die Betriebsposition der Offshore-Plattformvorrichtung 1 in größerem Detail. Die Plattform 3 weist eine Ober- und eine Unterseite auf. Die Oberseite wird auch als Deck 13 bezeichnet. Die Unterseite ist auch Teil der Unterwasserfläche 12. In die Plattform 3 ist lotrecht und durchgängig der kreisförmige Durchgang 6 geführt, durch den die rohrförmige Anlandevorrichtung 4 gesteckt ist. Die Anlandevorrichtung 4 weist an ihrer Außenseite vier äquidistant voneinander beabstandet, entlang der Längsachse L angeordnete Zahnstangen 14a, 14b, 14c auf, die an der Innenseite des zylindrischen Durchganges 6 der Plattform 3 mit in die Zahnstangen 14a, 14b, 14c eingreifenden Zahnrädern angetrieben werden, so dass eine Absenkbewegung und eine Anhebebewegung ermöglicht werden.

Im oberen Abschnitt der Anlandevorrichtung 4 sind Ausgänge 16 in der Außenwandung vorgesehen. Am unteren Ende sind die vier Anlandestellen 8a, 8b, 8c, 8d ausgebildet. Die Anlandestellen 8a, 8b, 8c, 8d umlaufen den Querschnitt der Anlandevorrichtung 4 vollständig, sodass ein Anlanden aus vier Richtungen mittels des CTV ermöglicht wird. Dazu ist das untere Ende der Anlandevorrichtung 4 hinreichend weit von dem abgesenkten Stützbein 2 gemäß Fig. 3 entfernt, d. h. der Abstand beträgt mindestens eine CTV-Länge, günstigerweise jedoch deutlich mehr.

Im Inneren der rohrförmigen Anlandevorrichtung 4 ist eine Leiter, Treppe o. Ä. vorgesehen, es kann auch ein Fahrstuhl vorgesehen sein, der den Transport von Personen vom Deck 13 zur Anlandestelle 8a, 8b, 8c, 8d und zurück ermöglicht. Jede der Anlandestellen 8a, 8b, 8c, 8d selbst ist ebenfalls als Öffnung in der Außenwandung ausgebildet, über die die Leiter 9a, 9b, 9c, 9d begehbar ist.

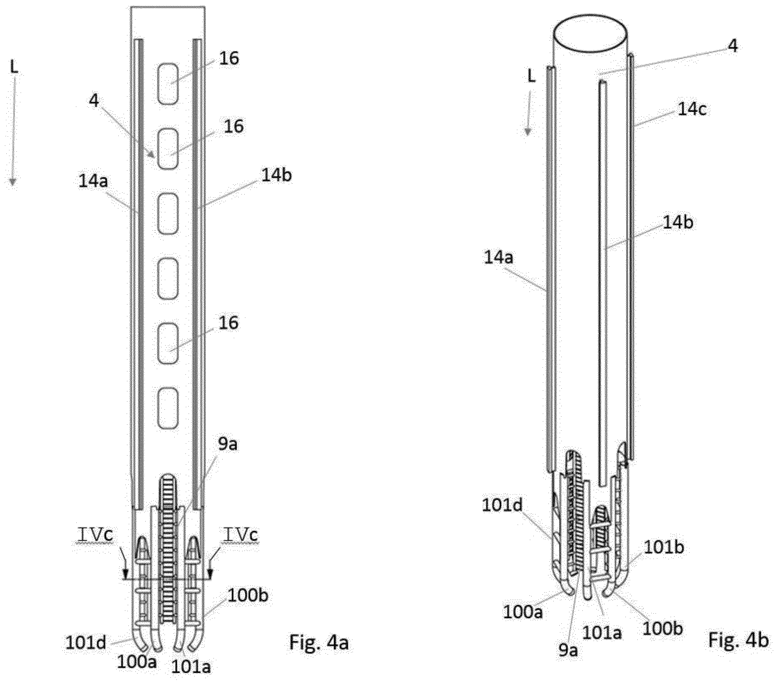

Fig. 4a zeigt die eigentliche Anlandevorrichtung 4 in einer seitlichen Ansicht. Hinsichtlich der Längsachse L in dem oberen Abschnitt und in dem mittleren Abschnitt sind in der Außenwandung die Ausgänge 16 übereinander und voneinander beabstandet angeordnet. Die Anlandevorrichtung 4 kann verschiedene Betriebspositionen annehmen. Die Anlandevorrichtung 4 kann in verschiedenen Höhen relativ zur Plattform 3 arretiert werden. In jeder der unterschiedlichen Höhen ist ein anderer der Ausgänge 16 auf Höhe des Decks 13 der Plattform 3 angeordnet. Die Anlandevorrichtung 4 wird so weit nach unten in Richtung zum Meeresboden abgesenkt, bis der untere Abschnitt der Anlandevorrichtung 4 in das Wasser eintaucht. Da sich ein Spalt zwischen der Meeresoberfläche 7 und der Unterseite 12 der Plattform 3 im Laufe des Tages z. B. aufgrund des Tidenhubs ändern wird, kann die Anlandevorrichtung 4 schrittweise nachgefahren werden, wobei die verschiedenen Ausgänge 16 auf Höhe des Decks 13 angeordnet sind. Die Betriebsstellung der Anlandevorrichtung 4 kann sich auch bei Änderung des Aufstellorts der Plattform 3 ändern.

An der Außenwandung der Anlandevorrichtung 4 sind die vier Zahnstangen 14a, 14b, 14c angeordnet. Die Zahnstangen 14a, 14b, 14c sind jeweils im Querschnitt T-förmig ausgebildet. Das eigentliche Zahnprofil ist senkrecht zur Außenwandung auf beiden Seiten des T-Beines des T-Profils angeordnet. Für jedes T-Profil sind wenigstens zwei Zahnräder vorgesehen, deren Drehachse radial zum kreisförmigen Querschnitt der Anlandevorrichtung 4 verläuft.

Die von jeder Anlandestelle 8a, 8b, 8c, 8d heraufführende Leiter 9a, 9b, 9c, 9d wird vorzugsweise bis zu einer Zwischenplattform, die nicht dargestellt ist, geführt, von der dann wiederum eine einzelne (nicht dargestellte) Leiter oder Treppe hochgeführt ist, die jeden der Ausgänge 16 passiert.

Fig. 4c zeigt den Schnitt entlang der Linie IVc-IVc in Fig. 4a. Es sind vier Anlandestellen 8a, 8b, 8c, 8d vorgesehen mit vier Leitern 9a, 9b, 9c, 9d und jeweils zwei Stahlrohren als Anlandeschutz, die den Bug des CTV abstützen und ein Berühren der zugehörenden Leiter 9a, 9b, 9c, 9d durch den Bug des CTV verhindern. Bei einer drehbar angeordneten Version dieser Erfindung ist eine Anlandestelle ausreichend.

In der Fig. 4b ist die Ansicht der Fig. 4a in einer isometrischen Ansicht dargestellt. Der kreisförmige Rohrquerschnitt wird deutlich sowie die T-förmige Ausbildung der seitlichen Zahnstangen 14a, 14b, 14c. Der Anfahrschutz 100a, 101a, 100b, 101b, 100c, 101c, 100d, 101d ist jeweils meeresbodenseitig nach innen abgebogen.

### Bezugszeichenliste

- 1: Offshore-Plattformvorrichtung
- 2: Stützbeine
- 3: Plattform
- 4: Anlandevorrichtung

- 6: Durchgang
- 7: Meeresoberfläche
- 8a: Anlandestelle
- 8b: Anlandestelle
- 8c: Anlandestelle
- 8d: Anlandestelle
- 9a: Leiter
- 9b: Leiter
- 9c: Leiter
- 9d: Leiter

- 11: Boot (CTV)
- 12: Unterwasserfläche/Unterseite
- 13: Deck/Oberseite
- 14a: Zahnstange
- 14b: Zahnstange
- 14c: Zahnstange

- 16: Ausgänge

- 100a: Anfahrschutz
- 101a: Anfahrschutz
- 100b: Anfahrschutz
- 101b: Anfahrschutz
- 100c: Anfahrschutz
- 101c: Anfahrschutz
- 100d: Anfahrschutz
- 101d: Anfahrschutz

- L: Längsachse

## Patentansprüche

1. Offshore-Plattformvorrichtung mit einer Plattform und mit einer Anlandevorrichtung mit einer Längsachse (L), die lotrecht zur Meeresoberfläche (7) ausgerichtet ist und die entlang ihrer Längsachse (L) relativ zur Plattform (3) in eine Transportposition anhebbar und in eine Betriebsposition absenkbar ausgebildet ist,
die Anlandevorrichtung (4) weist wenigstens eine Anlandestelle (8a, 8b, 8c, 8d) an ihrem unteren Ende auf, die in der Betriebsposition von einem Boot (11) aus erreichbar ist,
**dadurch gekennzeichnet, dass** die Anlandevorrichtung (4) durch einen Durchgang (6) in der Plattform (3) hindurchgeführt ist und in dem Durchgang (6) nach oben anhebbar und nach unten absenkbar ist.

2. Offshore- Plattformvorrichtung nach Anspruch 1,
**dadurch gekennzeichnet, dass** die wenigstens eine Anlandestelle (8a, 8b, 8c, 8d) in der Betriebsposition das Meer berührt.

3. Offshore- Plattformvorrichtung nach Anspruch 1 oder 2,
**dadurch gekennzeichnet, dass** die wenigstens eine Anlandestelle (8a, 8b, 8c, 8d) um die Längsachse (L) drehbar ausgebildet ist.

4. Offshore- Plattformvorrichtung nach Anspruch 1, 2 oder 3,
**dadurch gekennzeichnet, dass** am unteren Ende der Anlandevorrichtung (4) die Längsrichtung umlaufend mehrere Anlandestellen (8a, 8b, 8c, 8d) angeordnet sind.

5. Offshore- Plattformvorrichtung nach einem der vorhergehenden Ansprüche,
**dadurch gekennzeichnet, dass** die Anlandevorrichtung (4) einem Innenraum umfasst durch den wenigstens eine Leiter (9a, 9b, 9c, 9d) von der wenigstens einen Anlandestelle (8a, 8b, 8c, 8d) zu einem Ausgang (16) geführt ist.

6. Offshore- Plattformvorrichtung nach einem der vorhergehenden Ansprüche,
**dadurch gekennzeichnet, dass** die wenigstens eine Anlandestelle (8a, 8b, 8c, 8d) eine der Leitern (9a, 9b, 9c, 9d) aufweist und beidseitig und radial außen neben der Leiter (9a, 9b, 9c, 9d) jeweils ein Anfahrschutz (100a, 101a, 100b, 101b, 100c, 101c, 100d, 101d) angeordnet ist.

7. Offshore- Plattformvorrichtung nach einem der vorhergehenden Ansprüche,
**dadurch gekennzeichnet, dass** die Anlandevorrichtung (4) einen Innenraum aufweist der begehbar ist und der eine begehbare Verbindung zwischen der wenigstens einen Anlandestelle (8a, 8b, 8c, 8d) und dem Ausgang (16) herstellt.

8. Offshore- Plattformvorrichtung nach einem der vorhergehenden Ansprüche,
**dadurch gekennzeichnet, dass** entlang der Längsrichtung am oberen Ende mehrere Ausgänge (16) angeordnet sind.

9. Offshore- Plattformvorrichtung nach einem der vorhergehenden Ansprüche,
**dadurch gekennzeichnet, dass** die Hebe- und Senkbewegung der Anlandevorrichtung (4) mittels eines Zahnstangenantriebs angetrieben ist.

10. Verfahren zum Personaltransfer auf eine oder von einer Offshore-Plattformvorrichtung (1), indem
eine Plattform (3) in eine Betriebsposition gebracht wird,
eine Anlandevorrichtung (4) mit einer Längsachse (L), die lotrecht ausgerichtet ist, relativ zur Plattform (3) entlang der Längsachse (L) abgesenkt wird, bis ein unteres Ende der Anlandevorrichtung (4), das wenigstens eine Anlandestelle (8a, 8b, 8c, 8d) aufweist, das Meer berührt und
die Anlandevorrichtung (4) durch einen Durchgang (6) in der Plattform (3) hindurchgeführt wird.

11. Verfahren nach Anspruch 10,
**dadurch gekennzeichnet, dass** eine Eindringtiefe der Anlandevorrichtung (4) in dem Wasser einem gezeitenveränderlichen Wasserstand nachgeführt wird.

## Claims

1. Offshore platform device comprising a platform and a docking device which has a longitudinal axis (L) which is vertically oriented towards the surface of the sea (7) and is designed to be raised along its longitudinal axis (L) relative to the platform (3) into a transport position and to be lowered into an operational position,
the docking device (4) having at its lower end at least one docking point (8a, 8b, 8c, 8d) which is accessible from a boat (11) in the operational position,
**characterized in that** the docking device (4) is guided through a passage (6) in the platform (3) and can be raised upwards and lowered downwards in the passage (6).

2. Offshore platform device according to claim 1, **characterised in that** in the operational position the at least one docking point (8a, 8b, 8c, 8d) touches the sea.

3. Offshore platform device according to claim 1 or 2, **characterised in that** the at least one docking point (8a, 8b, 8c, 8d) is designed to be rotatable about the longitudinal axis (L).

4. Offshore platform device according to claim 1, 2 or 3, **characterised in that** at the lower end of the docking device (4) a plurality of docking points (8a, 8b, 8c, 8d) are arranged circumferentially around the longitudinal axis (L).

5. Offshore platform device according to one of the preceding claims, **characterised in that** the docking device (4) comprises an interior space through which at least one ladder (9a, 9b, 9c, 9d) leads from the at least one docking point (8a, 8b, 8c, 8d) to an exit (16).

6. Offshore platform device according to one of the preceding claims, **characterised in that** the at least one docking point (8a, 8b, 8c, 8d) has one of the ladders (9a, 9b, 9c, 9d), and a guard (100a, 101a, 100b, 101b, 100c, 101c, 100d, 101d) is arranged on both sides and radially outwards adjacent to the ladder (9a, 9b, 9c, 9d).

7. Offshore platform device according to one of the preceding claims, **characterised in that** the docking device (4) has an interior space which is accessible and which produces an accessible connection between the at least one docking point (8a, 8b, 8c, 8d) and the exit (16).

8. Offshore platform device according to one of the preceding claims, **characterised in that** a plurality of exits (16) are arranged in the longitudinal direction at the upper end.

9. Offshore platform device according to one of the preceding claims, **characterised in that** the lifting and lowering movement of the docking device (4) is driven by means of a rack and pinion drive.

10. Method of transferring personnel to or from an offshore platform device (1), in which a platform (3) is brought into an operational position, a docking device (4) having a longitudinal axis (L), which is vertically oriented, is lowered along the longitudinal axis (L) relative to the platform (3), until a lower end of the docking device (4), which has at least one docking point (8a, 8b, 8c, 8d), touches the sea and
the docking device (4) is guided through a passage (6) in the platform (3).

11. Method according to claim 10, **characterised in that** a penetration depth of the docking device (4) in the water is adjusted to a water level which varies with the tide.

## Revendications

1. Dispositif de plateforme offshore avec une plateforme et avec un dispositif d'accostage avec un axe longitudinal (L) qui est orienté perpendiculaire à la surface de la mer (7) et qui peut être soulevé dans une position de transport le long de son axe longitudinal (L) par rapport à la plateforme (3) et qui peut être abaissé dans une position opérationnelle, le dispositif d'accostage (4) présentant au moins un point d'accostage (8a, 8b, 8c, 8d) à son extrémité inférieure qui peut être atteint, en position opérationnelle, à partir d'un bateau (11),
**caractérisé en ce que** le dispositif d'accostage (4) est traversé par un passage (6) dans la plateforme (3) et peut être soulevé vers le haut et peut être abaissé vers le bas dans le passage (6).

2. Dispositif de plateforme offshore selon la revendication 1,
**caractérisé en ce que** le au moins un point d'accostage (8a, 8b, 8c, 8d) est en contact avec la mer en position opérationnelle.

3. Dispositif de plateforme offshore selon la revendication 1 ou 2,
**caractérisé en ce que** le au moins un point d'accostage (8a, 8b, 8c, 8d) est configuré rotatif autour de l'axe longitudinal (L).

4. Dispositif de plateforme offshore selon la revendication 1, 2 ou 3,
**caractérisé en ce que** plusieurs points d'accostage (8a, 8b, 8c, 8d) sont placés à l'extrémité inférieure du dispositif d'accostage (4) tout autour du sens longitudinal.

5. Dispositif de plateforme offshore selon l'une des revendications précédentes,
**caractérisé en ce que** le dispositif d'accostage (4) comprend un espace intérieur par lequel passe au moins une échelle (9a, 9b, 9c, 9d) du au moins un point d'accostage (8a, 8b, 8c, 8d) vers une sortie (16).

6. Dispositif de plateforme offshore selon l'une des revendications précédentes,
**caractérisé en ce que** le au moins un point d'accostage (8a, 8b, 8c, 8d) présente une des échelles (9a, 9b, 9c, 9d) et qu'une protection anticollision (100a, 101a, 100b, 101b, 100c, 101c, 100d, 101d) est placé de chacun des deux côtés et radialement à l'extérieur près de l'échelle (9a, 9b, 9c, 9d).

7. Dispositif de plateforme offshore selon l'une des revendications précédentes,
**caractérisé en ce que** le dispositif d'accostage (4) comprend un espace intérieur qui est praticable et qui établit une liaison praticable entre le au moins un point d'accostage (8a, 8b, 8c, 8d) et la sortie (16).

8. Dispositif de plateforme offshore selon l'une des revendications précédentes,
**caractérisé en ce que** plusieurs sorties (16) sont placées à l'extrémité supérieure le long du sens longitudinal.

9. Dispositif de plateforme offshore selon l'une des revendications précédentes,
**caractérisé en ce que** le mouvement de soulèvement et d'abaissement du dispositif d'accostage (4) est entraîné au moyen d'un entraînement à crémaillère.

10. Procédé pour le transfert de personnes sur une ou à partir d'un dispositif de plateforme offshore,
une plateforme (3) étant amenée dans une position opérationnelle,
un dispositif d'accostage (4) avec un axe longitudinal (L) qui est orienté perpendiculaire est abaissé par rapport à la plateforme (3) le long de l'axe longitudinal (L) jusqu'à ce qu'une extrémité inférieure du dispositif d'accostage (4), qui présente au moins un point d'accostage (8a, 8b, 8c, 8d), est en contact avec la mer et
le dispositif d'accostage (4) est traversé par un passage (6) dans la plateforme (3).

11. Procédé selon la revendication 10,
**caractérisé en ce qu'**une profondeur de pénétration du dispositif d'accostage (4) dans l'eau suit un niveau d'eau variable selon les marées.
